# EUROPEAN PATENT APPLICATION

(11) **EP 4 568 353 A1**
(43) Date of publication of application: **11.06.2025**
(21) Application number: 22953568.7
(22) Date of filing: 03.08.2022
(51) Int. Cl.: H04W 48/02

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/110116
(87) International publication number: WO 2024/026758

(57) **Abstract**

Embodiments of the present disclosure provide an information processing method and apparatus, a communication device and a storage medium. The information processing method is executed by a first type UE, and comprises: determining that a first type UE works in a first working mode, wherein the maximum bandwidth supported by the first working mode is less than or equal to the maximum bandwidth supported by a second working mode.

## Description

### TECHNICAL FIELD

The present disclosure relates to, but is not limited to, the field of wireless communications technologies, and in particular, to an information processing method and apparatus, a communication device and a storage medium.

### BACKGROUND

In related art, a new type of user equipment (UE) is introduced. This new type of UE is a reduced capability (Redcap) UE or a 5G NR-lite UE. This new type of UE is similar to an IoT device and usually meets at least one of following requirements: (1) low cost and low complexity; (2) coverage enhancement to a certain extent; (3) power saving; (4) the UE supporting an antenna structure of one RX or an antenna structure of two RXs.

Since the new UE is introduced, R18 continues to study enhancement of the new UE (such as Redcap UE), and its main application scenario is a large number of sensors. Currently, there is no way for a new UE of R17 to be applied in an operating mode of a new UE of R18.

### SUMMARY

Embodiments of the present disclosure provide an information processing method and apparatus, a communication device, and a storage medium.

According to a first aspect of the present disclosure, an information processing method is provided. The method is performed by a first-type UE, and includes:
determining that the first-type UE operates in a first operating mode, in which a maximum bandwidth supported by the first operating mode is less than or equal to a maximum bandwidth supported by a second operating mode.

In some embodiments, the first operating mode is an operating mode for a second-type UE.

In some embodiments, the first-type UE includes: a UE that supports one receiving antenna and/or a UE that supports two receiving antennas.

In some embodiments, determining that the first-type UE operates in the first operating mode includes:
determining that the first-type UE operates in the first operating mode during camping.

In some embodiments, determining that the first-type UE operates in the first operating mode during camping includes:
determining that the first-type UE operates in the first operating mode during camping, based on signal quality detected by the first-type UE being less than or equal to a threshold value.

In some embodiments, the method further includes: receiving a first system message block or a second system message block based on the first operating mode.

In some embodiments, the method further includes: determining whether to allow access to a cell on which the first-type UE is camped, based on access identity information carried in the first system message block or the second system message block, in which the access identity information indicates whether to allow the access to the camped-on cell.

In some embodiments, the method includes: sending advance indication information to a network device; in which the advance indication information is used to indicate the first-type UE as the second-type UE, or the advance indication information is used to indicate that the first-type UE operates in the first operating mode as the second-type UE.

In some embodiments, the method further includes: receiving a system message sent by the network device;
determining that the first-type UE operates in the first operating mode during camping includes one of:
determining, based on the system message, that a base station supports the first operating mode, and determining that the first-type UE operates in the first operating mode during camping; or
determining, based on the system message, that the base station supports the first operating mode but does not support the second operating mode, and determining that the first-type UE operates in the first operating mode during camping.

In some embodiments, the method further includes: determining, based on the system message, that the base station supports the first operating mode and the second operating mode, and determining that the first-type UE operates in the second operating mode during camping.

In some embodiments, the method further includes: sending report information, in which the report information is used to indicate that the first-type UE in a connected state has a capability to operate in the first operating mode.

In some embodiments, the report information includes: user assistance information (UAI), or UE capability indication information.

In some embodiments, the report information is used to indicate that the first-type UE requires to operate in the first operating mode and/or requires not to operate in the second operating mode.

In some embodiments, the capability of the first-type UE to operate in the first operating mode is a per UE characteristic; and/or
the capability of the first-type UE to operate in the first operating mode is a per band characteristic; and/or
the capability of the first-type UE to operate in the first operating mode is a per frequency range characteristic.

In some embodiments, sending the report information includes:
sending the report information based on receiving indication information sent by a network device; or
sending the report information based on an agreement.

In some embodiments, the indication information is used to instruct the first-type UE to report the report information; or
the indication information is used to indicate that a base station supports the first-type UE to operate in the first operating mode, and/or to indicate that the base station supports access of the second-type UE.

In some embodiments, sending the report information includes: sending a handover request to a target base station via a source base station for the first-type UE, in which the handover request carries the report information.

In some embodiments, the method includes: sending state information of the first-type UE, in which the state information is used to indicate that the first-type UE operates in the first operating mode or the second operating mode.

In some embodiments, sending the state information of the first-type UE includes: sending a release message carrying the state information in response to a connection release between the first-type UE and the base station.

According to a second aspect of the present disclosure, an information processing method is provided. The method is performed by a base station, and includes:
determining that a first-type UE operates in a first operating mode, in which a maximum bandwidth supported by the first operating mode is less than or equal to a maximum bandwidth supported by a second operating mode.

In some embodiments, the first operating mode is an operating mode for a second-type UE.

In some embodiments, the first-type UE includes: a UE that supports one receiving antenna and/or a UE that supports two receiving antennas.

In some embodiments, determining that the first-type UE operates in the first operating mode includes one of:
determining that the first-type UE operates in the first operating mode during camping, based on the base station supporting the first operating mode;
determining that the first-type UE operates in the first operating mode during camping, based on the base station supporting the first operating mode but not supporting the second operating mode.

In some embodiments, the method further includes: determining that the first-type UE operates in the second operating mode during camping, based on the base station supporting the first operating mode and the second operating mode.

In some embodiments, the method further includes: receiving report information, in which the report information is used to indicate that the first-type UE requires to operate in the first operating mode and/or requires not to operate in the second operating mode;
determining that the first-type UE operates in the first operating mode includes: determining that the first-type UE operates in the first operating mode based on the report information.

In some embodiments, the method includes: sending indication information;
in which the indication information is used to instruct the first-type UE to report the report information; or the indication information is used to indicate that the base station supports the first-type UE to operate in the first operating mode, and/or to indicate that the base station supports access of the second-type UE.

In some embodiments, determining that the first-type UE operates in the first operating mode based on the report information includes: determining, based on the report information, that the first-type UE operates in the first operating mode in response to coverage being limited.

In some embodiments, the base station includes: a source base station; and
the methods further includes:
receiving a handover request sent by the first-type UE; in which the handover request carries the report information;
sending the handover request to a target base station.

In some embodiments, the method includes: receiving state information of the first-type UE, in which the state information is used to indicate that the first-type UE operates in the first operating mode or the second operating mode.

In some embodiments, receiving the state information of the first-type UE includes: receiving a release message carrying the state information.

According to a third aspect of the present disclosure, an information processing apparatus is provided. The apparatus includes:
a first processing module, configured to determine that a first-type UE operates in a first operating mode, in which a maximum bandwidth supported by the first operating mode is less than or equal to a maximum bandwidth supported by a second operating mode.

In some embodiments, the first operating mode is an operating mode for a second-type UE.

In some embodiments, the first-type UE includes: a UE that supports one receiving antenna and/or a UE that supports two receiving antennas.

In some embodiments, the first processing module is configured to determine that the first-type UE operates in the first operating mode during camping.

In some embodiments, the first processing module is configured to determine that the first-type UE operates in the first operating mode, based on signal quality detected by the first-type UE being less than or equal to a threshold value.

In some embodiments, the apparatus includes: a first receiving module, configured to receive a first system message block or a second system message block based on the first operating mode.

In some embodiments, the first processing module is configured to determine whether to allow access to a cell on which the first type is camped based on access identity information carried in the first system message block or the second system message block; in which the access identity information indicates whether to allow the access to the camped-on cell.

In some embodiments, the apparatus includes: a first sending module, configured to send advance indication information to a network device; in which the advance indication information is used to indicate the first-type UE as the second-type UE; or the advance indication information is used to indicate that the first-type UE operates in the first operating mode as the second-type UE.

In some embodiments, the first receiving module is configured to receive a system message sent by a network device;
the first processing module is configured to determine, based on the system message, that a base station supports the first operating mode, and determine that the first-type UE operates in the first operating mode during camping; or
the first processing module is configured to determine, based on the system message, that the base station supports the first operating mode but does not support the second operating mode, and determines that the first-type UE operates in the first operating mode during camping.

In some embodiments, the first processing module is configured to determine, based on the system message, that the base station supports the first operating mode and the second operating mode, and determine that the first-type UE operates in the second operating mode during camping.

In some embodiments, the first sending module is configured to send report information, in which the report information is used to indicate that the first-type UE in a connected state has a capability to operate in the first operating mode.

In some embodiments, the report information includes: UAI, or UE capability indication information.

In some embodiments, the report information is used to indicate that the first-type UE requires to operate in the first operating mode and/or requires not to operate in the second operating mode.

In some embodiments, the capability of the first-type UE to operate in the first operating mode is a per UE characteristic; and/or

the capability of the first-type UE to operate in the first operating mode is a per band characteristic; and/or

the capability of the first-type UE to operate in the first operating mode is a per frequency range characteristic.

In some embodiments, the first sending module is configured to send the report information based on receiving indication information sent by a network device; or
the first sending module is configured to send the report information based on an agreement.

In some embodiments, the indication information is used to instruct the first-type UE to report the report information; or
the indication information is used to indicate that the base station supports the first-type UE to operate in the first operating mode, and/or to indicate that the base station supports access of the second-type UE.

In some embodiments, the first sending module is configured to send a handover request to a target base station via a source base station for the first-type UE, in which the handover request carries the report information.

In some embodiments, the first sending module is configured to send state information of the first-type UE, in which the state information is used to indicate that the first-type UE operates in the first operating mode or the second operating mode.

In some embodiments, the first sending module is configured to send state information of the first-type UE, in which sending the state information of the first-type UE includes: sending a release message carrying the state information based on a connection release between the first-type UE and a base station.

According to a fourth aspect of the present disclosure, an information processing apparatus is provided. The apparatus includes:
a second processing module, configured to determine that a first-type UE operates in a first operating mode, in which a maximum bandwidth supported by the first operating mode is less than or equal to a maximum bandwidth supported by a second operating mode.

In some embodiments, the first operating mode is an operating mode for a second-type UE.

In some embodiments, the first-type UE includes: a UE that supports one receiving antenna and/or a UE that supports two receiving antennas.

In some embodiments, the second processing module is configured to determine that the first-type UE operates in the first operating mode during camping, based on the base station supporting the first operating mode; or
the second processing module is configured to determine that the first-type UE operates in the first operating mode during camping, based on the base station supporting the first operating mode but not supporting the second operating mode.

In some embodiments, the second processing module is configured to determine that the first-type UE operates in the second operating mode during camping, based on the base station supporting the first operating mode and the second operating mode.

In some embodiments, the apparatus further includes: a second receiving module, configured to receive report information, in which the report information is used to indicate that the first-type UE requires to operate in the first operating mode and/or requires not to operate in the second operating mode. model;
The second processing module is configured to determine, based on the report information, that the first-type UE operates in the first operating mode.

In some embodiments, the apparatus further includes: a second sending module, configured to send indication information;

The indication information is used to instruct the first-type UE to report the report information; or the indication information is used to indicate that the base station supports the first-type UE to operate in the first operating mode, and/or to indicate that the base station supports access of the second-type UE.

In some embodiments, the second processing module is configured to determine, based on the report information, that the first-type UE operates in the first operating mode in response to coverage being limited.

In some embodiments, the base station includes: a source base station;
the second receiving module is configured to receive a handover request sent by the first-type UE; in which the handover request carries the report information;
the second sending module is configured to send the handover request to a target base station.

In some embodiments, the second receiving module is configured to receive state information of the first-type UE, in which the state information is used to indicate that the first-type UE operates in the first operating mode or the second operating mode.

In some embodiments, the second receiving module is configured to receive a release message carrying state information.

According to a fifth aspect of the present disclosure, a communication device is provided. The communication device includes:
a processor; and
a memory for storing instructions executable by the processor;
**in** which the processor is configured to implement the information processing method of any embodiment of the present disclosure when running executable instructions.

According to a sixth aspect of the disclosure, a computer storage medium is provided. The computer storage medium stores a computer executable program. When the executable program is executed by a processor, the information processing method of any embodiment of the disclosure is implemented.

The technical solutions provided by the embodiments of the present disclosure may include the following beneficial effects.

**In** the embodiments of the present disclosure, the first-type UE determines that the first-type UE operates in the first operating mode, in which the maximum bandwidth supported by the first operating mode is less than or equal to the maximum bandwidth supported by the second operating mode; this can make the first-type UE operate in a relatively smaller bandwidth operating mode, which is beneficial to the coverage enhancement of the first-type UE.

It should be understood that the above general description and the following detailed description are only exemplary and explanatory, and do not limit the embodiments of the present disclosure.

### BRIEF DESCRIPTION OF THE DRAWINGS

Fig. 1 is a schematic structural diagram of a wireless communication system according to an exemplary embodiment.
Fig. 2 is a schematic diagram of a bandwidth part (BWP) according to an exemplary embodiment.
Fig. 3 is a schematic diagram of an information processing method according to an exemplary embodiment.
Fig. 4 is a schematic diagram of an information processing method according to an exemplary embodiment.
Fig. 5 is a schematic diagram of an information processing method according to an exemplary embodiment.
Fig. 6 is a schematic diagram of an information processing method according to an exemplary embodiment.
Fig. 7 is a schematic diagram of an information processing method according to an exemplary embodiment.
Fig. 8 is a schematic diagram of an information processing method according to an exemplary embodiment.
Fig. 9 is a block diagram of an information processing apparatus according to an exemplary embodiment.
Fig. 10 is a block diagram of an information processing apparatus according to an exemplary embodiment.
Fig. 11 is a block diagram of a user equipment (UE) according to an exemplary embodiment.
Fig. 12 is a block diagram of a base station according to an exemplary embodiment.

### DETAILED DESCRIPTION

Exemplary embodiments will be described in detail herein, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with the embodiments of the present disclosure. Instead, they are merely examples of apparatuses and methods consistent with some aspects of the embodiments of the present disclosure as detailed in the appended claims.

The terms used in the embodiments of the present disclosure are merely for the purpose of describing particular embodiments, and are not intended to limit the embodiments of the present disclosure. The singular forms "a", "an" and "the" used in the embodiments of the present disclosure and the appended claims are also intended to include plural forms, unless the context clearly indicates other meanings. It should also be understood that the term "and/or" as used herein refers to and includes any or all possible combinations of one or more associated listed items.

It should be understood that although terms "first", "second", "third", etc., may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the words "if" as used herein may be interpreted as "when", or "in a case that", or "in response to determining that".

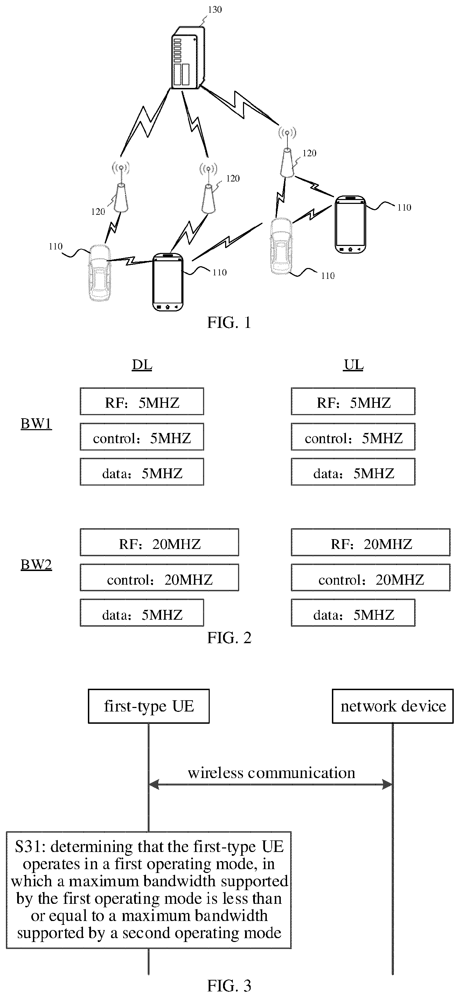

Please refer to FIG. 1, which shows a schematic structural diagram of a wireless communication system provided by an embodiment of the present disclosure. As shown in Fig. 1, the wireless communication system is a communication system based on cellular mobile communication technologies. The wireless communication system may include several user equipments 110 and several base stations 120.

The user equipment 110 may be a device that provides voice and/or data connectivity to a user. The user equipment 110 may communicate with one or more core networks via a Radio Access Network (RAN). The user equipment 110 may be an Internet of Things (IoT) user equipment, such as a sensor device, a mobile phone (or a cellular phone), and a computer with an IoT user equipment, which may be, for example, a fixed, portable, pocket-sized, handheld, computer-built-in, or vehicle-mounted device. For example, the user equipment 110 may be a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 may also be equipment of an unmanned aerial vehicle. Alternatively, the user equipment 110 may also be a vehicle-mounted device, for example, it may be an on-board computer with a wireless communication function, or a wireless user equipment externally connected to an on-board computer. Alternatively, the user equipment 110 may also be a roadside device, for example, it may be a streetlight, a signal light, or other roadside devices with a wireless communication function.

The base station 120 may be a network-side device in a wireless communication system. The wireless communication system may be a 4th generation mobile communication (4G) system, also known as a Long Term Evolution (LTE) system; or the wireless communication system may also be a 5G system, also known as a new air interface system or a 5G NR system. Alternatively, the wireless communication system may also be a next generation system beyond the 5G system. An access network in the 5G system may be called a New Generation-Radio Access Network (NG-RAN).

The base station 120 may be an evolved base station (eNB) used in the 4G system. Alternatively, the base station 120 may also be a base station (gNB) that adopts a central-distributed architecture in the 5G system. When the base station 120 adopts the central-distributed architecture, it usually includes a central unit (CU) and at least two distributed units (DUs). The CU is provided with a protocol stack including a Packet Data Convergence Protocol (PDCP) layer, a Radio Link Control (RLC) layer, and a Media Access Control (MAC) layer. The DU is provided with a Physical (PHY) layer protocol stack. The specific implementation of the base station 120 is not limited in the embodiments of the present disclosure.

A wireless connection may be established between the base station 120 and the user equipment 110 through a wireless air interface. In different implementations, the wireless air interface is a wireless air interface based on a 4G standard; or the wireless air interface is a wireless air interface based on a 5G standard, for example the wireless air interface is a new air interface; or the wireless air interface may also be a wireless air interface based on a next generation mobile communication standard beyond the 5G.

In some embodiments, an End-to-End (E2E) connection may also be established between the user equipments 110, such as vehicle to vehicle (V2V) communication, vehicle to infrastructure (V2I) communication, vehicle to pedestrian (V2P) communication, and other scenes in vehicle to everything (V2X) communication.

Here, the above user equipment may be considered as a terminal in the following embodiments.

In some embodiments, the above-mentioned wireless communication system may also include a network management device 130.

The several base stations 120 are connected to the network management device 130 respectively. The network management device 130 may be a core network device in a wireless communication system. For example, the network management device 130 may be a Mobility Management Entity (MME) in an Evolved Packet Core (EPC). Alternatively, the network management device may also be other core network devices, such as a Serving GateWay (SGW), a Public Data Network GateWay (PGW), a Policy and Charging Rules Function (PCRF) or a Home Subscriber Server (HSS), etc. The implementation of the network management device 130 is not limited in the embodiments of the present disclosure.

In order to facilitate understanding by those skilled in the art, the embodiments of the present disclosure describe multiple implementations to clearly describe the technical solutions of the embodiments of the present disclosure. Of course, those skilled in the art can understand that the multiple implementations provided in the embodiments of the present disclosure can be executed alone, or executed together in combination with the methods of other implementations in the embodiments of the present disclosure, or executed alone with some methods in other related art, or combined with the methods of other implementations in the embodiments of the present disclosure and then executed together with some methods in other related art. This is not limited in the embodiments of the present disclosure.

In order to better understand the technical solution described in any embodiment of the present disclosure, first, a partial description of the related art is provided:
In an embodiment, an applicable bandwidth for a Redcap UE or an NR-lite UE is further reduced, that is, further enhanced. For example, as shown in Fig. 2, the applicable bandwidth is reduced from 20MHz to 5MHz. For example, for a bandwidth (BW) BW1, bandwidths corresponding to a radio frequency (RF), control and data in downlink (DL) transmission and/or uplink (UL) transmission may all be 5MHZ. For another example, as shown in BW3, bandwidths corresponding to an RF and control in DL transmission and/or UL transmission may be 20MHZ, and bandwidth corresponding to data in the DL transmission and/or the UL transmission may be 5MHZ. It can be considered that after further reducing the applicable bandwidth for the Redcap UE or the NR-lite UE, the UE will operate in a lower bandwidth mode. This type of UE may become an R18 enhanced Redcap UE.

As shown in Fig. 3, an embodiment of the present disclosure provides an information processing method. The method is performed by a first-type UE, and includes:
Step S31, determining that the first-type UE operates in a first operating mode, in which a maximum bandwidth supported by the first operating mode is less than or equal to a maximum bandwidth supported by a second operating mode.

In an embodiment, the first-type UE may be, but is not limited to, various reduced-capability terminals. For example, the first-type UE may be an R17 Redcap UE or the like.

In an embodiment, the second-type UE may be, but is not limited to, various reduced-capability terminals. For example, the second-type UE may be an R18 Redcap UE and/or an R18 enhanced Redcap UE, or the like. For another example, the second-type UE may be an R19 Redcap UE. For another example, the second-type UE may be a UE that operates at a lower bandwidth in subsequent releases, for example, the applicable bandwidth is reduced from 5 MHz to lower.

In yet another embodiment, both the first-type UE and the second-type UE may be various mobile terminals or fixed terminals. For example, the first-type UE and the second-type UE may be, but are not limited to, mobile phones, computers, wearable devices, game devices, multimedia devices, or various sensors.

In an embodiment, both the first-type UE and the second-type UE may be, but are not limited to: a UE supporting one receiving antenna and/or a UE supporting two receiving antennas. For example, the first-type UE may be, but is not limited to, at least one of: an R17 Redcap UE that supports one receiving antenna, or an R17 Redcap UE that supports two receiving antennas. For example, the second-type UE may be, but is not limited to, at least one of: an R18 Redcap UE that supports one receiving antenna and an R18 Redcap UE that supports two receiving antennas.

In some embodiments, the first operating mode is an operating mode for the second-type UE. In this way, in the embodiments of the present disclosure, the first-type UE can be made to operate in the first operating mode for the second-type UE. The first operating mode is the mode in which the second-type UE operates. It can be seen that compared with the original second mode in which the first-type UE operates, an operating bandwidth of the first operating mode is further reduced.

As an embodiment, the first-type UE is an R17 Redcap UE operating in a mode developed in R17, that is, a radio frequency and a baseband support a maximum of 20Mhz in FR1 and support a maximum of 100Mhz in FR2, that is, operating in the second operating mode.

The first-type UE operates in the first operating mode for the second-type UE, that is, the first-type UE is the R17 Redcap UE operates in a mode developed in R18. In this case, the radio frequency and the baseband may be reduced to 5Mhz, or restriction may be applied to scheduling, i.e., a bandwidth corresponding to the data in DL transmission and/or UL transmission may be 5MHZ, that is, operating in the first operating mode.

Therefore, compared to the second operating mode, the first operating mode is a narrower bandwidth mode.

Here, a maximum bandwidth supported by at least one bandwidth in the first operating mode is smaller than a maximum bandwidth supported by a corresponding bandwidth in the second operating mode.

In an embodiment, the maximum bandwidth supported by the first operating mode is less than the maximum bandwidth supported by the second operating mode.

As an example, referring to the operating mode of BW1 in Fig. 2, the maximum bandwidth supported by the first operating mode for the R18 Redcap UE is 5MHZ. For example, the maximum bandwidth supported by the first operating mode for the RF, control and data scheduling may be 5MHZ. The maximum bandwidth supported by the second operating mode is 20MHZ. For example, the maximum bandwidth supported by the second operating mode for the RF, control and data scheduling may be 20MHZ. Here, the maximum bandwidth supported by the first operating mode is less than the maximum bandwidth supported by the second operating mode. In this example, the R17 Redcap UE may operate in the first operating mode with a maximum supported bandwidth of 5MHZ.

In another embodiment, the maximum bandwidth supported by the first operating mode is less than or equal to the maximum bandwidth supported by the second operating mode.

For example, referring to the operating mode of BW3 in Fig. 2, the maximum bandwidth supported by the first operating mode of the R18 Redcap UE is 5MHZ or 20MHZ. For example, the maximum bandwidth supported by the first operating mode for the RF and control scheduling is 20MHZ, and the maximum bandwidth supported by the first operating mode for the data scheduling is 5MHZ. The maximum bandwidth supported by the second operating mode is 20MHZ. For example, the maximum bandwidth supported by the second operating mode for the RF, control and data scheduling may be 20MHZ. Here, the maximum bandwidth supported by the first operating mode for the data scheduling is less than the maximum bandwidth supported by the second operating mode for the data scheduling, the maximum bandwidth supported by the first operating mode for the RF scheduling is equal to the maximum bandwidth supported by the second operating mode for the RF scheduling, and the maximum bandwidth supported by the first operating mode for of the control scheduling is equal to the maximum bandwidth supported by the second operating mode for the control scheduling. In this example, the R17 Redcap UE may operate in the first operating mode, with a maximum supported data bandwidth of 5MHZ and a maximum supported RF and control bandwidth of 20MHZ.

In the embodiments of the present disclosure, the first-type UE determines that the first-type UE operates in the first operating mode, in which the maximum bandwidth supported by the first operating mode is less than or equal to the maximum bandwidth supported by the second operating mode. In this way, the first-type UE can operate in an operating mode with a relatively smaller bandwidth, which is beneficial to coverage enhancement of the first-type UE.

Moreover, in the embodiments of the present disclosure, the first-type UE can be made to operate in the first operating mode in which the second-type UE operates, which is beneficial to the first-type UE having an enhanced coverage characteristic of the second-type UE. For example, the R17 Redcap UE can be made to operate in an operating mode with smaller and narrower bandwidth (for example, 5MHZ) corresponding to the R18 Redcap UE.

It should be noted that those skilled in the art can understand that the methods provided by the embodiments of the present disclosure can be executed alone or together with some methods in the embodiments of the present disclosure or some methods in the related art.

In some embodiments, step S31 of determining that the first-type UE operates in the first operating mode includes: determining that the first-type UE operates in the first operating mode during camping.

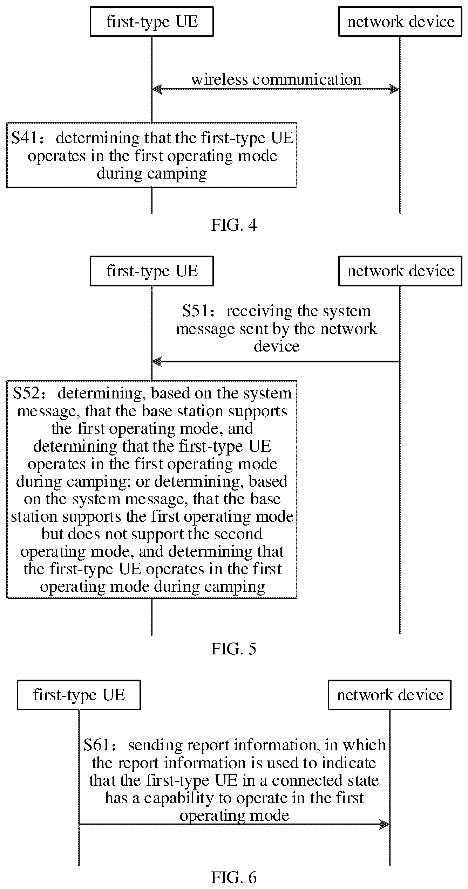

As shown in Fig. 4, an embodiment of the present disclosure provides an information processing method. The method is performed by a first-type UE, and includes:
step S41, determining that the first-type UE operates in the first operating mode during camping.

In some embodiments of the present disclosure, the first-type UE and the second-type UE may respectively be the first-type UE and the second-type UE in the above embodiments; the first operating mode and the second operating mode may respectively be the first operating mode and the second operating mode in the above mentioned embodiments.

In some embodiments, step S41 includes: based on signal quality detected by the first-type UE being less than or equal to a threshold value, determining that the first-type UE operates in the first operating mode during camping.

An embodiment of the present disclosure provides an information processing method, performed by the first-type UE, including: based on the signal quality detected by the first-type UE being less than or equal to the threshold value, determining that the first-type UE operates in the first operating mode during camping.

Here, the camping in step S41 may refer to a procedure of camping.

Here, the first-type UE during camping in step S41 may include the first-type UE in a non-connected state. For example, it is determined that the first-type UE in a radio resource control (RRC) non-connected state operates in the first operating mode. Here, the non-connected state may be an RRC non-connected state, and the RRC non-connected state includes an RRC inactive state or an RRC idle state.

For example, the first-type UE measures that signal quality of a reference signal is less than a predetermined threshold value, and determines that the first-type UE operates in the first operating mode during camping. Here, the reference signal is any kind of reference signal and is not limited here.

In the embodiments of the present disclosure, it can be determined that the first-type UE operates in the first operating mode during camping; for example, it can be determined by the first-type UE that the detected signal quality is less than or equal to the threshold value, and it can be determined that the first-type UE operates in the first operating mode with a relatively smaller bandwidth.

An embodiment of the present disclosure provides an information processing method, performed by the first-type UE, including: based on the signal quality detected by the first-type UE being greater than the threshold value, determining that the first-type UE operates in the second operating mode during camping..

In this way, in the embodiments of the present disclosure, if the first-type UE detects that the signal quality is greater than the threshold value, it means that the network signal is relatively good, and the first-type UE may be made to operate in the second operating mode with relatively larger bandwidth during camping.

It should be noted that those skilled in the art can understand that the methods provided in the embodiments of the present disclosure can be executed alone or together with some methods in the embodiments of the present disclosure or some methods in the related art.

An embodiment of the present disclosure provides an information processing method, performed by the first-type UE, including: receiving a first system message block or a second system message block based on the first operating mode.

Here, the second system message block may be a system message block different from the first system message block. For example, the first system message block may be system information block type 1 (SIB1), and the second system message block may be SIB1-bis. For example, a maximum bandwidth configured for the second system message block is smaller than a maximum bandwidth configured for the first system message block.

Here, the second system message block may be any remaining minimum system message block.

Of course, in another embodiment, the second system message block may also be replaced by any other system message block. Exemplarily, the other system message block may be, but is not limited to, at least one of SIB1, SIB2, SIB11, or SIB12, etc.

In this way, in the embodiments of the present disclosure, the first-type UE can operate in the first operating mode with a relatively smaller bandwidth and receive the second system message block with a relatively smaller bandwidth, which enables the first-type UE to adapt to operating in the first operating mode, and enables coverage enhancement of the first-type UE.

In an embodiment, receiving the second system message block may include: receiving the second system message block sent by a network device.

In an embodiment, the network device includes an access network device and/or a core network device. Here, the access network device may be, but is not limited to, a base station; the core network device may be, but is not limited to, various network functions or logical nodes, or entities that implement network functions, etc. Here, the base station may be, but is not limited to, at least one of: a 3G base station, a 4G base station, a 5G base station and other evolved base stations.

Here, if the first-type UE receives the second system message block sent by the core network device, it may be: the core network device sends the second system message block to the base station, and the first-type UE receives the second system message forwarded by the base station.

An embodiment of the present disclosure provides an information processing method, performed by the first-type UE, including: based on access identity information carried in the first system message block or the second system message block, determining whether to allow access to a cell on which the first-type UE is camped. The access identity information indicates whether to allow the access to the camped-on cell.

Here, if the access identity information indicates that the access to the camped-on cell is allowed, then the first-type UE determines that the first-type UE is allowed to access the cell on which it is camped; or, if the access identity information indicates that the access to the camped-on cell is not allowed, then the first-type UE determines that the first-type UE is not allowed to access the cell on which it is camped.

In this way, in the embodiments of the present disclosure, the first-type UE can accurately determine whether to allow access to the cell on which the first-type UE is camped, based on the access identity information carried in the first system message block or the second system message block.

Of course, in another embodiment, the first-type UE may also receive the first system message block based on the first operating mode, and/or the first-type UE may also determine whether to allow access to the cell on which the first-type UE is camped based on the access identity information carried in the first system message block; in which the access identity information indicates whether to allow the access to the camped-on cell.

Some embodiment of the present disclosure provide an information processing method, performed by the first-type UE, including: sending advance indication information to a network device; in which the advance indication information is used to indicate the first-type UE as the second-type UE; or the advance indication information is used to indicate that the first-type UE operates in the first operating mode as the second-type UE.

Here, the advance indication information may be sent based on a random access channel (RACH) resource.

Here, sending the advance indication information to the network device may include: sending the advance indication information to the network device based on the first operating mode.

Exemplarily, the first-type UE sends the advance indication information to the network device, in which the advance indication information is used to indicate the second-type UE; in this way, the network device may be informed through the advance indication information that the first-type UE is the second-type UE. That is, in this case, the network device may not be able to distinguish that the UE is actually the first-type UE, because the network device may only know that this is an access of the second-type UE.

Exemplarily, the first-type UE sends the advance indication information to the network device, in which the advance indication information is used to indicate the first-type UE and indicate that the first-type UE operates in the first operating mode; in this way, it may be informed through the advance indication information that the firs-type UE may operate in the first operating mode as the second-type UE.

It should be noted that those skilled in the art can understand that the methods provided by the embodiments of the present disclosure can be executed alone or together with some methods in the embodiments of the present disclosure or some methods in the related art.

In some embodiments, the method includes: receiving a system message sent by the network device; and
step S41 includes one of:
determining, based on the system message, that a base station supports the first operating mode, and determining that the first-type UE operates in the first operating mode during camping; or
determining, based on the system message, that the base station supports the first operating mode but does not support the second operating mode, and determining that the first-type UE operates in the first operating mode during camping.

As shown in Fig. 5, an embodiment of the present disclosure provides an information processing method. The method is performed by a first-type UE, and includes:
Step S51, receiving the system message sent by the network device;
Step S52, determining, based on the system message, that the base station supports the first operating mode, and determining that the first-type UE operates in the first operating mode during camping; or determining, based on the system message, that the base station supports the first operating mode but does not support the second operating mode, and determining that the first-type UE operates in the first operating mode during camping.

In some embodiments of the present disclosure, the first-type UE and the second-type UE may respectively be the first-type UE and the second-type UE in the above embodiments; the first operating mode and the second operating mode may respectively be the first operating mode and the second operating mode in the above mentioned embodiments.

Here, the system message may be any kind of system message. For example, it may be SIB1, SIB2, SIB X or SIB1-bis, etc.

In the embodiments of the present disclosure, if it is determined that the base station supports the first operating mode, then the first-type UE can operate in the first operating mode, and thus it can be determined that the first-type UE operates in the first operating mode. Alternatively, if it is determined that the base station supports the first operating mode but does not support the second operating mode, it may be directly determined that the first-type UE can operate in the first operating mode to match the base station. Moreover, the embodiments of the present disclosure can accurately know the operating mode supported by the base station by obtaining the system message of the network device.

An embodiment of the present disclosure provides an information processing method, performed by the first-type UE, including: determining, based on system message, that the base station supports the first operating mode and the second operating mode, and determining that the first-type UE operates in the second operating mode during camping.

In this way, in the embodiments of the present disclosure, if it is determined that the base station supports the first operating mode and the second operating mode, the first-type UE may be preferentially selected to operate in the second operating mode.

Of course, in another embodiment, the first-type UE does not need to determine the operating mode supported by the base station based on the system message. The first-type UE may determine the operating mode supported by the base station based on any method, so as to determine the operating mode supported by the first-type UE. For example, if the first-type UE determines that the base station supports the first operating mode, it is determined that the first-type UE operates in the first operating mode during camping; or if the first-type UE determines that the base station supports the first operating mode but does not support the second operating mode, it is determined that the first-type UE operates in the first operating mode during camping. As another example, if the first-type UE determines that the base station supports the first operating mode and supports the second operating mode, it is determined that the first-type UE operates in the second operating mode during camping.

It should be noted that those skilled in the art can understand that the methods provided in the embodiments of the present disclosure can be executed alone or together with some methods in the embodiments of the present disclosure or some methods in the related art.

As shown in Fig. 6, an embodiment of the present disclosure provides an information processing method. The method is performed by a first-type UE, and includes:
Step S61, sending report information, in which the report information is used to indicate that the first-type UE in a connected state has a capability to operate in the first operating mode.

Here, the connection state may be an RRC connection state.

In some embodiments of the present disclosure, the first-type UE and the second-type UE may respectively be the first-type UE and the second-type UE in the above embodiments; the first operating mode and the second operating mode may respectively be the first operating mode and the second operating mode in the above mentioned embodiments.

In an embodiment, the report information includes: User Assistance Information (UAI) or UE capability indication information.

In an embodiment, the report information is that: report, in overheating auxiliary information, a requirement of operating in a bandwidth reduced mode, i.e., the first operating mode, in response to the first-type UE being overheated.

In an embodiment, the report information is used to indicate that the first-type UE requires to operate in the first operating mode and/or requires not to operate in the second operating mode.

Here, if the report information indicates that the first-type UE in the connected state has the capability to operate in the first operating mode, the base station may schedule the first-type UE to operate in the first operating mode.

Here, if the report information indicates that the first-type UE in the connected state has the capability to operate in the first operating mode and the first-type UE requires to operate in the first operating mode, the base station may schedule the first-type UE to operate in the first operating mode.

Here, if the report information indicates that the first-type UE in the connected state has the capability to operate in the first operating mode and the first-type UE requires not to operate in the second operating mode, the base station may schedule the first-type UE to operate in the first operating mode.

In some embodiments, the capability of the first-type UE to operate in the first operating mode is a per UE characteristic; and/or
the capability of the first-type UE to operate in the first operating mode is a per band characteristic; and/or
the capability of the first-type UE to operate in the first operating mode is a per frequency range characteristic.

For example, if a certain first-type UE has the capability to operate in the first operating mode, the report information may be used to indicate that this first-type UE has the capability to operate in the first operating mode. In this way, the capability of the first-type UE to operate in the first operating mode is reported for each UE, i.e., per UE reporting.

For example, if the first-type UE has the capability to operate in the first operating mode in a first bandwidth and does not have the capability to operate in the first operating mode in the second bandwidth, the report information may be used to indicate that the first-type UE has the capability to operate in the first operating mode in the first bandwidth. In this way, the capability of the first-type UE to operate in the first operating mode is reported for each band, i.e., per band reporting.

For example, if the first-type UE has the capability to operate in the first operating mode in a first frequency range and does not have the capability to operate in the first operating mode in a second frequency range, the report information may be used to indicate that the first-type UE has the capability to operate in the first operating mode in the first frequency range. In this way, the capability of the first-type UE to operate in the first operating mode is reported for each frequency range, i.e., per frequency range reporting.

In some embodiments, step S61 of sending the report information includes at least one of:
based on a temperature of the first-type UE being greater than or equal to a first temperature, determining to send the report information; or
based on an operating power of the first-type UE being greater than or equal to a first power, determining to send the report information.

An embodiment of the present disclosure provides an information processing method, performed by the first-type UE, including:
based on the temperature of the first-type UE being greater than or equal to the first temperature, determining to send the report information;
based on the operating power of the first-type UE being greater than or equal to the first power, determining to send the report information.

In the embodiments of the present disclosure, when the temperature of the first-type UE is greater than or equal to the first temperature, that is, the first-type UE is relatively overheated, or when the operating frequency of the first-type UE is greater than or equal to the first power, that is, the power of the first-type UE is relatively high, the report information, that indicates the requirement of operating in the first operating mode, can be sent and/or the report information, that indicates the first-type UE has the capability to operate in the first operating mode, can be sent. In this way, the base station can schedule the UE to operate in the first operating mode. This is beneficial to cooling or power reduction of the subsequent operating of the first-type UE.

In some embodiments, step S61 of sending the report information includes:
sending the report information based on receiving indication information sent by a network device; or
sending the report information based on an agreement.

An embodiment of the present disclosure provides an information processing method, performed by the first-type UE, including: sending the report information based on receiving indication information sent by the network device.

In an embodiment, the indication information is used to instruct the first-type UE to report the report information; or the indication information is used to indicate that a base station supports the first-type UE to operate in the first operating mode, and/or to indicate that the base station supports access of the second-type UE.

Exemplarily, the first-type UE receives the indication information sent by the base station, and the indication information is used to instruct the first-type UE to report the report information, which is used to indicate that the first-type UE requires to operate in the first operating mode and/or does not require to operate in the second operating mode; and the first-type UE sends the report information to the base station. In this way, in the embodiments of the present disclosure, the first-type UE can report the report information by receiving the indication information that directly instructs to report the report information.

Exemplarily, the first-type UE receives the indication information sent by the base station, which is used to indicate that the base station supports the R17 Redcap UE to operate in the first operating mode, or to indicate that the base station supports access of the R18 Redcap UE; and the first-type UE sends the report information to the base station. In this way, in the embodiments of the present disclosure, the first-type UE can report the report information through an implicit indication of the capability supported by the base station.

An embodiment of the present disclosure provides an information processing method, performed by the first-type UE, including: sending the report information based on the agreement.

Here, the agreement may be a wireless communication agreement. Alternatively, the agreement may be an agreement determined by the network device and the first-type UE.

In the embodiments of the present disclosure, the first-type UE can directly determine to send the report information based on the agreement, thus providing multiple ways of sending the report information to adapt to more application scenarios.

It should be noted that those skilled in the art can understand that the methods provided in the embodiments of the present disclosure can be executed alone or together with some methods in the embodiments of the present disclosure or some methods in the related art.

In some embodiments, step 61 of sending the report information includes: sending a handover request to a target base station via a source base station for the first-type UE, in which the handover request carries the report information.

An embodiment of the present disclosure provides an information processing method, performed by the first-type UE, including: sending the handover request to the target base station via the source base station for the first-type UE, in which the handover request carries the report information.

Here, the handover request is used to request handover to the target base station.

Exemplarily, the first-type UE sends the report information to the source base station for the first-type UE, and the source base station for the first-type UE sends the report information to the target base station.

In the embodiments of the present disclosure, the first-type UE can send the report information to the target base station through the handover request, so that the target base station can know the capability of the UE to operate in the lower bandwidth mode or can know which operating mode is suitable for the first-type UE to operate in (such as the first operating mode or the second operating mode).

Moreover, the two functions of performing handover and carrying information indicating the operating mode of the first-type UE can be implemented through the handover request, which improves the utilization rate of the handover request and also reduces the signaling overhead.

Of course, in another embodiment, the report information may also be transmitted to other network functions or logical nodes, for example, the report information may be forwarded by the base station to the core network device. The report information may also be carried by other inter-node messages, for example, it may be carried by a release message or a configuration message. In this way, when the core network paging the user next time, the information can be carried and sent to the base station, so that the base station can correctly initiate paging. For example, for the UEs operating in the first operating mode and the second operating mode, if the base station pages the UEs in different time-frequency domain resources, it can use the information as a reference for paging.

An embodiment of the present disclosure provides an information processing method, performed by the first-type UE, including: sending state information of the first-type UE, in which the state information is used to indicate that the first-type UE operates in the first operating mode or the second operating mode.

In some embodiments, sending the state information of the first-type UE includes: sending a release message carrying the state information based on a connection release between the first-type UE and the base station.

An embodiment of the present disclosure provides an information processing method, performed by the first-type UE, including: sending the release message carrying the state information based on a connection release between the first-type UE and the base station.

Here, sending the release message carrying the state information may include: sending the release message carrying the state information to a base station, or sending the release message carrying the state information to a core network device.

In the embodiments of the present disclosure, the release message can carry the state information of which operating mode the first-type UE is operating in. This can facilitate the using of a paging method suitable for the operating mode of the first-type UE during paging, which is conducive to the subsequent paging. Moreover, since the two functions of releasing the connection and informing the base station and other network devices of the operating mode of the first-type UE can be implemented through the release message, the utilization rate of the release request is improved and the signaling overhead can also be reduced.

It should be noted that those skilled in the art can understand that the methods provided in the embodiments of the present disclosure can be executed alone or together with some methods in the embodiments of the present disclosure or some methods in the related art.

The following information processing method is performed by the base station, which is similar to the above descriptions of the information processing methods performed by the first-type UE. For technical details not disclosed in the embodiments of the information processing methods performed by the base station, please refer to the descriptions of the examples of the information processing method performed by the first-type UE, which will not be described in detail here.

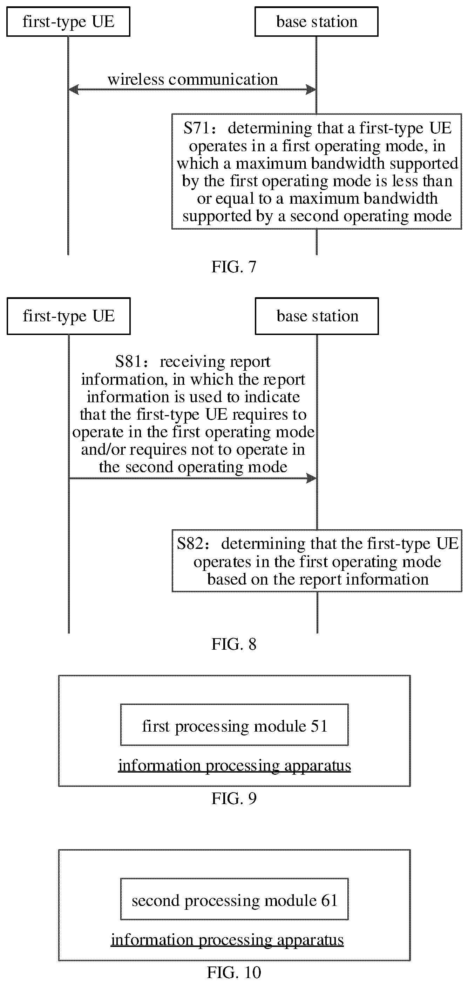

As shown in Fig. 7, an embodiment of the present disclosure provides an information processing method. The method is performed by a base station, and includes:
step S71, determining that a first-type UE operates in a first operating mode, in which a maximum bandwidth supported by the first operating mode is less than or equal to a maximum bandwidth supported by a second operating mode.

In some embodiments of the present disclosure, the first-type UE and the second-type UE may respectively be the first-type UE and the second-type UE in the above embodiments; the first operating mode and the second operating mode may respectively be the first operating mode and the second operating mode in the above mentioned embodiments.

Exemplarily, the first operating mode is an operating mode for the second-type UE.

Exemplarily, the first-type UE includes an R17 Redcap UE.

Exemplarily, the second-type UE includes an R18 Redcap UE and/or an R18 enhanced Redcap UE.

Exemplarily, the first-type UE includes: a UE that supports one receiving antenna and/or a UE that supports two receiving antennas. For example, the first-type UE may be, but is not limited to, at least one of: an R17 Redcap UE that supports one receiving antenna, or an R17 Redcap UE that supports two receiving antennas. For example, the second-type UE may be, but is not limited to, at least one of: an R18 Redcap UE that supports one receiving antenna, or an R18 Redcap UE that supports two receiving antennas.

In some embodiments, step S71 of determining that the first-type UE operates in the first operating mode includes one of:
determining that the first-type UE operates in the first operating mode during camping, based on the base station supporting the first operating mode; or
determining that the first-type UE operates in the first operating mode during camping, based on the base station supporting the first operating mode but not supporting the second operating mode.

An embodiment of the present disclosure provides an information processing method, performed by the base station, including one of:
determining that the first-type UE operates in the first operating mode during camping, based on the base station supporting the first operating mode; or
determining that the first-type UE operates in the first operating mode during camping, based on the base station supporting the first operating mode but not supporting the second operating mode.

An embodiment of the present disclosure provides an information processing method, performed by the base station, including: determining that the first-type UE operates in the second operating mode during camping, based on the base station supporting the first operating mode and the second operating mode.

In the embodiments of the present disclosure, the base station can determine the operating mode of the first-type UE during camping according to the operating mode supported by the base station. In this way, the base station can configure the operating mode of the first-type UE.

In some embodiments, the method includes: receiving report information, in which the report information is used to indicate that the first-type UE requires to operate in the first operating mode and/or requires not to operate in the second operating mode; and
step S71 of determining that the first-type UE operates in the first operating mode includes: determining that the first-type UE operates in the first operating mode based on the report information.

As shown in Fig. 8, an embodiment of the present disclosure provides an information processing method. The method is performed by a base station and includes:
step S81, receiving report information, in which the report information is used to indicate that the first-type UE requires to operate in the first operating mode and/or requires not to operate in the second operating mode; and
step S82, determining that the first-type UE operates in the first operating mode based on the report information.

Here, step 81 of receiving the report information includes: receiving the report information sent by the first-type UE.

In some embodiments of the present disclosure, the report information may be the report information in the above embodiments.

Exemplarily, the report information is also used to indicate that the first-type UE in a connected state has a capability to operate in the first operating mode.

Exemplarily, the report information includes UAI or UE capability indication information.

Exemplarily, the capability of the first-type UE to operate in the first operating mode is a per UE characteristic; and/or
the capability of the first-type UE to operate in the first operating mode is a per band characteristic; and/or
the capability of the first-type UE to operate in the first operating mode is a per frequency range characteristic.

Exemplarily, if the report information is used to indicate that the first-type UE in the connected state has the capability to operate in the first operating mode, the base station determines that the first-type UE operates in the first operating mode.

Exemplarily, if the report information is used to indicate that the first-type UE requires to operate in the first operating mode and/or requires not to operate in the second operating mode, the base station determines that the first-type UE operates in the first operating mode.

Exemplarily, if the report information indicates that the first-type UE in the connected state has the capability to operate in the first operating mode, and the report information also indicates that the first-type UE requires to operate in the first operating mode and/or requires not to operate in the second operating mode, the base station determines that the first-type UE operates in the first operating mode.

In this way, in the embodiments of the present disclosure, through reporting by the first-type UE that the first-type UE has the capability to operate in the first operating mode, and/or the first-type UE requires to operate in the first operating mode and/or requires not to operate in the second operating mode, the base station can determine that the first-type UE operates in the first operating mode and schedule the first-type UE to operate in the first operating mode.

An embodiment of the present disclosure provides an information processing method, performed by a base station, including: sending indication information; in which the indication information is used to instruct the first-type UE to report the report information; or the indication information is used to indicate that the base station supports the first-type UE to operate in the first operating mode, and/or used to indicate that the base station supports access of the second-type UE. In this way, in the embodiments of the present disclosure, the first-type UE can be triggered to send the report information of the capability through the indication information.

In some embodiments, step S82 includes: based on the report information, determining that the first-type UE operates in the first operating mode in response to coverage being limited.

An embodiment of the present disclosure provides an information processing method, performed by the base station, including: based on the report information, determining that the first-type UE operates in the first operating mode in response to coverage being limited.

In the embodiments of the present disclosure, the limited coverage may cause the first-type UE to operate in an operating mode with a smaller bandwidth, which is beneficial to improving enhanced coverage of the first-type UE.

Of course, in another embodiment, the base station may also determine, based on the report information, that the first-type UE operates in the first operating mode in case of network congestion or other situations.

In some embodiments, the base station includes: a source base station.

An embodiment of the present disclosure provides an information processing method, performed by the source base station, including:
Receive a handover request sent by the first-type UE; wherein the handover request carries report information;
sending a handover request to a target base station.

An embodiments of the present disclosure provides an information processing method, which is performed by the source base station, including: based on the report information carried in the handover request, determining an acceptance decision for a cell to which the handover request instructs to handover. Here, the acceptance decision may be to allow access to the cell to which the handover request instructs to handover, or the acceptance decision may be to not allow access to the cell to which the handover request instructs to handover.

An embodiment of the present disclosure provides an information processing method, which is performed by the base station and includes: sending the handover request to a core network device.

An embodiment of the present disclosure provides an information processing method, which is performed by the source base station and includes: receiving state information of the first-type UE, in which the state information is used to indicate that the first-type UE operates in the first operating mode or the second operating mode.

In some embodiments, receiving the state information of the first-type UE includes: receiving a release message carrying the state information.

An embodiment of the present disclosure provides an information processing method, which is performed by a source base station and includes: receiving the release message carrying the state information, in which the state information is used to indicate that the first-type UE operates in the first operating mode or the second operating mode.

For the above implementations, specific reference may be made to the descriptions on the first-type UE, which will not be repeated here.

It should be noted that those skilled in the art can understand that the methods provided in the embodiments of the present disclosure can be executed alone or together with some methods in the embodiments of the present disclosure or some methods in the related art.

In order to further explain any embodiment of the present disclosure, a specific example is provided below.

An embodiment of the present disclosure provides an information processing method, which is performed by a communication device including a first-type UE and a base station. The information processing method includes the following steps.

Step S91, the communication device determines that the first-type UE operates in a first operating mode, in which a maximum bandwidth supported by the first operating mode is less than or equal to a maximum bandwidth supported by a second operating mode.

Here, the communication device may include a first-type UE or a base station.

Here, the first-type UE may be an R17 Redcap UE, etc.; the second-type UE may be an R18 Redcap UE and/or an R18 enhanced Redcap UE, etc.

Here, the first-type UE may be a UE that supports one receiving antenna and/or a UE that supports two receiving antennas.

Here, the first operating mode is an operating mode for the second-type UE. For example, the first operating mode is an operating mode for the R18 Redcap UE.

In an optional embodiment, the maximum bandwidth supported by the first operating mode is 5MHZ; the maximum bandwidth supported by the second operating mode is 20MHZ.

Step S91 includes: step S91A and/or step S91B and/or step S91C;
Step S91A, the first-type UE determines that the first-type UE operates in the first operating mode during camping.

In an optional embodiment, based on signal quality detected by the first-type UE being less than or equal to a threshold value, it is determined that the first-type UE operates in the first operating mode during camping.

In an optional embodiment, the first-type UE acquires a second system message block based on the first operating mode; and determines whether to allow access to a cell on which the first-type UE is camped, based on access identity information carried in the first system message block or the second system message block; in which the access identity information indicates whether to allow the access to the camped-on cell. Here, the second system message block may be SIB 1-bis.

In an optional embodiment, the first-type UE sends advance indication information to a network device; in which the advance indication information is used to indicate the first-type UE as the second-type UE; or the advance indication information is used to indicate that the first-type UE operates in the first operating mode as the second-type UE. For example, the first-type UE may inform the network device that the first-type UE may operate as an R18 Redcap UE. For another example, the first-type UE may inform the network device that the first-type UE may operate in the first operating mode as an R18 Redcap UE.

Step S92B, the base station determines that the first-type UE operates in the first operating mode during camping;
In an optional embodiment, if the base station determines that the base station supports the first operating mode but does not support the second operating mode, it determines that the first-type UE operates in the first operating mode during camping.

In another optional embodiment, if the base station determines that the base station supports the first operating mode and supports the second operating mode, it determines that the first-type UE operates in the second operating mode during camping.

Step S91C, the first-type UE sends report information to the network device, in which the report information is used to indicate that the first-type UE in a connected state has a capability to operate in the first operating mode;
In an optional embodiment, the report information sent by the first-type UE is also used to indicate that the first-type UE requires to operate in the first operating mode and/or requires not to operate in the second operating mode.

In an optional embodiment, the report information includes UAI or UE capability indication information.

In an optional embodiment, the first-type UE determines that a temperature of the first-type UE is higher than a first temperature, and sends the report information.

In an optional embodiment, the capability of the first-type UE to operate in the first operating mode is a per UE characteristic; and/or the capability of the first-type UE to operate in the first operating mode is a per band characteristic; and/or the capability of the first-type UE to operate in the first operating mode is a per frequency range characteristic.

In an optional embodiment, the report information is sent based on indication information sent by the base station, and/or is sent based on an agreement. For example, step S91C includes at least one of step S91C1 or step S91C2.

Step S91C1, the base station sends the indication information, in which the indication information is used to instruct the first-type UE to report the report information; or the indication information is used to indicate that the base station supports the first-type UE to operate in the first operating mode, and/or indicates that the base station supports access of the second-type UE.

In an optional embodiment, the base station sends the indication information, in which the indication information instructs the first-type UE to report the UAI for requiring to operate in the first operating mode.

In another optional embodiment, the base station sends the indication information, in which the indication information indicates that the base station supports the first-type UE to operate in the first operating mode, or the indication information indicates that the base station supports access of the second-type UE. For example, the base station supports the R17 Redcap UE to operate in the first operating mode. For another example, the base station is a base station that supports the access of the R18 Redcap UE, and the base station has the capability to support the first operating mode.

Step S91C2, the first-type UE sends the report information based on the agreement;
Step S92, based on the report information, the base station determines that the first-type UE operates in the first operating mode.

In an optional embodiment, the base station determines, based on the report information, that the first-type UE operates in the first operating mode in response to coverage being limited.

Step S93, the base station sends the report information to another network device; for example, the base station sends the report information to a target base station or a core network device;
Step S94, the first-type UE sends the state information of the first-type UE to another network device, in which the state information is used to indicate that the first-type UE operates in the first operating mode or the second operating mode. For example, it may be that the first-type UE sends the state information to the base station, and the base station sends the state information to the core network device.

It should be noted that those skilled in the art can understand that the methods provided in the embodiments of the present disclosure can be executed alone or together with some methods in the embodiments of the present disclosure or some methods in the related art.

As shown in Fig. 9, an embodiment of the present disclosure provides an information processing apparatus, including:
a first processing module 51, configured to determine that a first-type UE operates in a first operating mode, in which a maximum bandwidth supported by the first operating mode is less than or equal to a maximum bandwidth supported by a second operating mode.

An information processing apparatus provided by an embodiment of the present disclosure includes: a first-type UE.

In some embodiments, the first operating mode is an operating mode for a second-type UE.

In some embodiments, the first-type UE includes an R17 Redcap UE; the second-type UE includes an R18 Redcap UE and/or an R18 enhanced Redcap UE.

In some embodiments, the first-type UE includes: a UE that supports one receiving antenna and/or a UE that supports two receiving antennas.

An embodiment of the present disclosure provides an information processing apparatus, including: the first processing module 51, configured to determine that the first-type UE operates in the first operating mode during camping.

An embodiment of the present disclosure provides an information processing apparatus, including: the first processing module 51, configured to determine that the first-type UE operates in the first operating mode, based on signal quality detected by the first-type UE being less than or equal to a threshold value.

An embodiment of the present disclosure provides an information processing apparatus, including: a first receiving module, configured to receive a first system message block or a second system message block based on the first operating mode.

An embodiment of the present disclosure provides an information processing apparatus, including: the first processing module 51, configured to determine whether to allow access to a cell on which the first type is camped based on access identity information carried in the first system message block or the second system message block; in which the access identity information indicates whether to allow the access to the camped-on cell.

An embodiment of the present disclosure provides an information processing apparatus, including: a first sending module, configured to send advance indication information to a network device; in which the advance indication information is used to indicate the first-type UE as the second-type UE; or the advance indication information is used to indicate that the first-type UE operates in the first operating mode as the second-type UE.

An embodiment of the present disclosure provides an information processing apparatus, including: a first receiving module, configured to receive a system message sent by a network device;

The first processing module 51 is configured to determine, based on the system message, that a base station supports the first operating mode, and determine that the first-type UE operates in the first operating mode during camping; or
the first processing module 51 is configured to determine, based on the system message, that the base station supports the first operating mode but does not support the second operating mode, and determines that the first-type UE operates in the first operating mode during camping.

An embodiment of the present disclosure provides an information processing apparatus, including: the first processing module 51, configured to determine, based on the system message, that the base station supports the first operating mode and the second operating mode, and determine that the first-type UE operates in the second operating mode during camping.

An embodiment of the present disclosure provides an information processing apparatus, including: the first sending module, configured to send report information, in which the report information is used to indicate that the first-type UE in a connected state has a capability to operate in the first operating mode.

In some embodiments, the report information includes: UAI, or UE capability indication information.

In some embodiments, the report information is used to indicate that the first-type UE requires to operate in the first operating mode and/or requires not to operate in the second operating mode.

An embodiment of the present disclosure provides an information processing apparatus, including: the first sending module, configured to determine to send the report information, based on a temperature of the first-type UE being greater than or equal to a first temperature; or
the first sending module is configured to determine to send the report information, based on an operating power of the first-type UE being greater than or equal to a first power.

In some embodiments, the capability of the first-type UE to operate in the first operating mode is a per UE characteristic; and/or
the capability of the first-type UE to operate in the first operating mode is a per band characteristic; and/or
the capability of the first-type UE to operate in the first operating mode is a per frequency range characteristic.

An embodiment of the present disclosure provides an information processing apparatus, including: the first sending module, configured to send the report information based on receiving indication information sent by a network device.

An embodiment of the present disclosure provides an information processing apparatus, including: the first sending module, configured to send the report information based on an agreement.

In some embodiments, the indication information is used to instruct the first-type UE to report the report information; or
the indication information is used to indicate that the base station supports the first-type UE to operate in the first operating mode, and/or to indicate that the base station supports access of the second-type UE.

An embodiment of the present disclosure provides an information processing apparatus, including: the first sending module, configured to send a handover request to a target base station via a source base station for the first-type UE, in which the handover request carries the report information.

An embodiment of the present disclosure provides an information processing apparatus, including: the first sending module, configured to send state information of the first-type UE, in which the state information is used to indicate that the first-type UE operates in the first operating mode or the second operating mode.

An embodiment of the present disclosure provides an information processing apparatus, including: the first sending module, configured to send state information of the first-type UE, in which sending the state information of the first-type UE includes: sending a release message carrying the state information based on a connection release between the first-type UE and a base station.

As shown in Fig. 10, an embodiment of the present disclosure provides an information processing apparatus. The apparatus includes:
a second processing module 61, configured to determine that a first-type UE operates in a first operating mode, in which a maximum bandwidth supported by the first operating mode is less than or equal to a maximum bandwidth supported by a second operating mode.

An information processing apparatus provided by an embodiment of the present disclosure includes: a base station.

In some embodiments, the first operating mode is an operating mode for a second-type UE.

In some embodiments, the first-type UE includes an R17 Redcap UE;
the second-type UE includes an R18 Redcap UE and/or an R18 enhanced Redcap UE.

In some embodiments, the first-type UE includes: a UE that supports one receiving antenna and/or a UE that supports two receiving antennas.

An embodiment of the present disclosure provides an information processing apparatus, including: the second processing module 61, configured to determine that the first-type UE operates in the first operating mode during camping based on the base station supporting the first operating mode; or
the second processing module 61 is configured to determine that the first-type UE operates in the first operating mode during camping based on the base station supporting the first operating mode but not supporting the second operating mode.

An embodiment of the present disclosure provides an information processing apparatus, including: the second processing module 61, configured to determine that the first-type UE operates in the second operating mode during camping, based on the base station supporting the first operating mode and the second operating mode.

An embodiment of the present disclosure provides an information processing apparatus, including: a second receiving module, configured to receive report information, in which the report information is used to indicate that the first-type UE requires to operate in the first operating mode and/or requires not to operate in the second operating mode;
the second processing module 61 is configured to determine, based on the report information, that the first-type UE operates in the first operating mode.

An embodiment of the present disclosure provides an information processing apparatus, including: a second sending module, configured to send indication information;

The indication information is used to instruct the first-type UE to report the report information; or the indication information is used to indicate that the base station supports the first-type UE to operate in the first operating mode, and/or to indicate that the base station supports access of the second-type UE.

An embodiment of the present disclosure provides an information processing apparatus, including: the second processing module 61, configured to determine, based on the report information, that the first-type UE operates in the first operating mode in response to coverage being limited.

In some embodiments, the base station includes: a source base station;
the second receiving module is configured to receive a handover request sent by the first-type UE; in which the handover request carries the report information; and
the second sending module is configured to send the handover request to the target base station.

An embodiment of the present disclosure provides an information processing apparatus, including: the second receiving module, configured to receive a handover request sent by the first-type UE; in which the handover request carries the report information;
the second sending module is configured to send the handover request to a target base station.

An embodiment of the present disclosure provides an information processing apparatus, including: the second receiving module, configured to receive state information of the first-type UE, in which the state information is used to indicate that the first-type UE operates in the first operating mode or the second operating mode.

An embodiment of the present disclosure provides an information processing apparatus, including: the second receiving module, configured to receive a release message carrying the state information.

It should be noted that those skilled in the art can understand that the apparatuses provided in the embodiments of the present disclosure can be executed alone or together with some apparatuses in the embodiments of the present disclosure or some apparatuses in the related art.

Regarding the apparatuses in the above embodiments, the specific manner in which each module performs operations has been described in detail in the embodiments related to the methods, and will not be described in detail here.

Embodiments of the present disclosure provide a communication device, including:
a processor; and
a memory for storing instructions executable by the processor;
in which the processor is configured to implement the information processing method of any embodiment of the present disclosure when running the executable instructions.

In an embodiment, the communication device may include, but is not limited to, at least one of: a network device or a first-type UE. Here, the network device includes a base station.

The processor may include various types of storage media, which are non-transitory computer storage media that can continue to memorize the information stored thereon after the user equipment is powered off.

The processor may be connected to the memory through a bus or the like, and be used to read the executable program stored on the memory, for example, at least one of the methods shown in Figs. 3 to 8.

Embodiments of the present disclosure also provide a computer storage medium. The computer storage medium stores a computer executable program. When the executable program is executed by a processor, the information processing method of any embodiment of the present disclosure is implemented, for example, at least one of the methods shown in Figs. 3 to 8.

Regarding the devices or storage media in the above embodiments, the specific manner in which each module performs operations has been described in detail in the embodiments related to the methods, and will not be described in detail here.

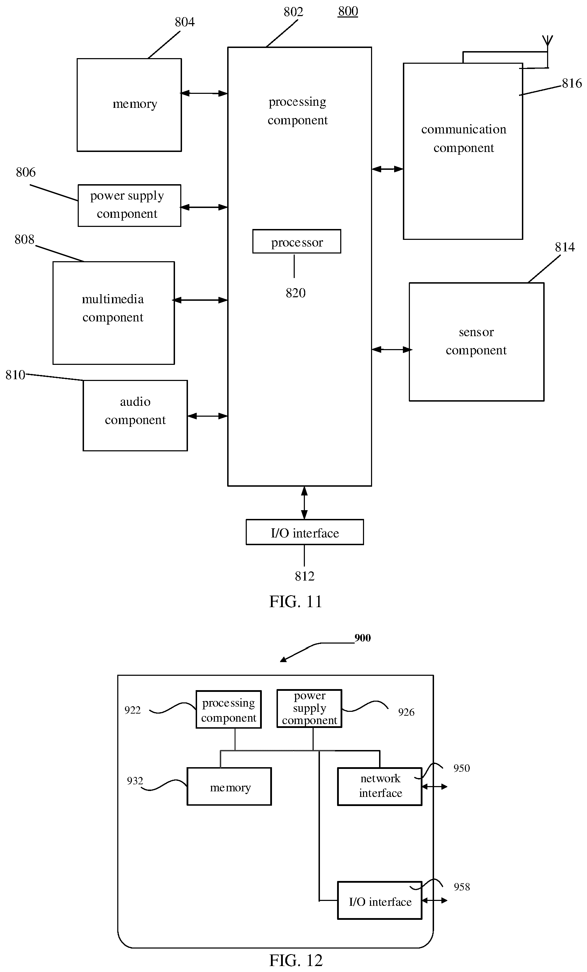

Fig. 11 is a block diagram of a user equipment 800 according to an exemplary embodiment. For example, the user equipment 800 may be a mobile phone, a computer, a digital broadcast user device, a messaging device, a game console, a tablet device, a medical device, a fitness device, a personal digital assistant, or the like.

Referring to Fig. 11, the user equipment 800 may include one or more of: a processing component 802, a memory 804, a power supply component 806, a multimedia component 808, an audio component 810, an input/output (I/O) interface 812, and a sensor component 814, and a communication component 816.

The processing component 802 generally controls the overall operations of the user equipment 800, such as operations associated with display, phone calls, data communications, camera operations, and recording operations. The processing component 802 may include one or more processors 820 to execute instructions to complete all or part of the steps of the above method. Additionally, the processing component 802 may include one or more modules that facilitate interaction between processing component 802 and other components. For example, the processing component 802 may include a multimedia module to facilitate interaction between the multimedia component 808 and the processing component 802.

The memory 804 is configured to store various types of data to support operations at the user equipment 800. Examples of such data include instructions for any application or method operating on the user equipment 800, contact data, phonebook data, messages, pictures, videos, etc. The memory 804 may be implemented by any type of volatile or non-volatile storage device, or their combination, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power supply component 806 provides power to various components of the user equipment 800. The power supply component 806 may include a power management system, one or more power supplies, and other components associated with generating, managing, and distributing power to the user equipment 800.

The multimedia component 808 includes a screen that provides an output interface between the user equipment 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundary of a touch or slide action, but also detect the duration and pressure associated with the touch or slide action. In some embodiments, the multimedia component 808 includes a front-facing camera and/or a rear-facing camera. When the user equipment 800 is in an operating mode, such as a shooting mode or a video mode, the front camera and/or the rear camera may receive external multimedia data. Each front-facing camera and rear-facing camera may be a fixed optical lens system or have a focal length and optical zoom capabilities.

The audio component 810 is configured to output and/or input an audio signal. For example, the audio component 810 includes a microphone (MIC) configured to receive the external audio signal when the user equipment 800 is in an operating mode, such as a call mode, a recording mode, and a speech recognition mode. The received audio signal may be further stored in the memory 804 or sent via the communication component 816. In some embodiments, the audio component 810 also includes a speaker for outputting audio signals.

The I/O interface 812 provides an interface between the processing component 802 and a peripheral interface module. The peripheral interface module may be a keyboard, a click wheel, a button, etc. These button may include, but is not limited to: a home button, a volume button, a start button, and a lock button.

The sensor component 814 includes one or more sensors that provide various aspects of status assessment for the user equipment 800. For example, the sensor component 814 may detect the open/closed state of the user equipment 800, the relative positioning of components, such as a display and a keypad of the user equipment 800, the sensor component 814 may also detect a position change of the user equipment 800 or a component of the user equipment 800, presence or absence of user contact with the user equipment 800, an orientation or an acceleration/deceleration of the user equipment 800, and a temperature change of the user equipment 800. The sensor component 814 may include a proximity sensor configured to detect presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the user equipment 800 and other devices. The user equipment 800 may access a wireless network based on a communication standard, such as WiFi, 4G or 5G, or their combination. In an exemplary embodiment, the communication component 816 receives a broadcast signal or broadcast related information from an external broadcast management system via a broadcast channel. In an exemplary embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the user equipment 800 may be configured by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components used to perform the above methods.

In an exemplary embodiment, there is provided a non-transitory computer-readable storage medium including instructions, for example a memory 804 including instructions that can be executed by the processor 820 of the user equipment 800 to complete the above methods. For example, the non-transitory computer-readable storage medium may be a ROM, a random access memory (RAM), a CD-ROM, a magnetic tape, a floppy disk, an optical data storage device, etc.

As shown in Fig. 12, an embodiment of the present disclosure shows a structure of a base station. For example, the base station 900 may be provided as a network side device. Referring to Fig. 12, the base station 900 includes a processing component 922, which further includes one or more processors, and memory resources represented by a memory 932 for storing instructions, such as an application program, executable by the processing component 922. The application program stored in the memory 932 may include one or more modules, each corresponding to a set of instructions. In addition, the processing component 922 is configured to execute the instructions to perform any of the above mentioned methods applied to the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server^{™}, Mac OS X^{™}, Unix^{™}, Linux^{™}, FreeBSD^{™} or the like.

Other embodiments of the present disclosure will be readily apparent to those skilled in the art from consideration of the specification and practice of the invention disclosed herein. The present disclosure is intended to cover any variations, uses, or adaptations of the present disclosure that follow the general principles of the invention and include common sense or customary technical means in the technical field that are not disclosed in the present disclosure. It is intended that the specification and examples be considered as exemplary only, with a true scope and spirit of the present disclosure being indicated by the following claims.

It is to be understood that the present disclosure is not limited to the precise construction described above and illustrated in the accompanying drawings, and that various modifications and changes may be made without departing from the scope thereof. The scope of the present disclosure is limited only by the appended claims.

## Claims

1. An information processing method, performed by a first-type user equipment (UE), comprising:
determining that the first-type UE operates in a first operating mode, wherein a maximum bandwidth supported by the first operating mode is less than or equal to a maximum bandwidth supported by a second operating mode.

2. The method according to claim 1, wherein the first operating mode is an operating mode for a second-type UE.

3. The method according to claim 1, wherein the first-type UE comprises: a UE supporting one receiving antenna and/or a UE supporting two receiving antennas.

4. The method according to any one of claims 1 to 3, wherein determining that the first-type UE operates in the first operating mode comprises:
determining that the first-type UE operates in the first operating mode during camping.

5. The method according to claim 4, wherein determining that the first-type UE operates in the first operating mode during camping comprises:
determining that the first-type UE operates in the first operating mode during camping, based on signal quality detected by the first-type UE being less than or equal to a threshold value.

6. The method according to claim 4, further comprising:
receiving a first system message block or a second system message block based on the first operating mode.

7. The method according to claim 6, further comprising:
determining whether to allow access to a cell on which the first-type UE is camped, based on access identity information carried in the first system message block or the second system message block, wherein the access identity information indicates whether to allow the access to the camped-on cell.

8. The method according to claim 4, further comprising:
sending advance indication information to a network device;
wherein the advance indication information is used to indicate the first-type UE as the second-type UE, or the advance indication information is used to indicate that the first-type UE operates in the first operating mode as the second-type UE.

9. The method according to claim 4, further comprising:
receiving a system message sent by a network device;
wherein determining that the first-type UE operates in the first operating mode during camping comprises one of:
determining that a base station supports the first operating mode based on the system message, and determining that the first-type UE operates in the first operating mode during camping; or
determining that the base station supports the first operating mode but does not support the second operating mode based on the system message, and determining that the first-type UE operates in the first operating mode during camping.

10. The method according to claim 9, further comprising:
determining that the base station supports the first operating mode and the second operating mode based on the system message, and determining that the first-type UE operates in the second operating mode during camping.

11. The method according to any one of claims 1 to 3, further comprising:
sending report information, wherein the report information is used to indicate that the first-type UE in a connected state has a capability to operate in the first operating mode.

12. The method according to claim 11, wherein the report information comprises: user assistance information (UAI), or UE capability indication information.

13. The method according to claim 11, wherein the report information is used to indicate that the first-type UE requires to operate in the first operating mode and/or requires not to operate in the second operating mode.

14. The method according to claim 11, wherein
the capability of the first-type UE to operate in the first operating mode is a per UE characteristic;
the capability of the first-type UE to operate in the first operating mode is a per band characteristic; and/or
the capability of the first-type UE to operate in the first operating mode is a per frequency range characteristic.

15. The method according to claim 11, wherein sending the report information comprises:
sending the report information based on receiving indication information sent by a network device; or
sending the report information based on an agreement.

16. The method according to claim 15, wherein
the indication information is used to instruct the first-type UE to report the report information; or
the indication information is used to indicate that a base station supports the first-type UE to operate in the first operating mode, and/or to indicate that the base station supports access of the second-type UE.

17. The method according to claim 11, wherein sending the report information comprises:
sending a handover request to a target base station via a source base station for the first-type UE, wherein the handover request carries the report information.

18. The method according to any one of claims 1 to 3, further comprising:
sending state information of the first-type UE, wherein the state information is used to indicate that the first-type UE operates in the first operating mode or the second operating mode.

19. The method according to claim 18, wherein sending the state information of the first-type UE comprises:
sending a release message carrying the state information based on a connection release between the first-type UE and a base station.

20. An information processing method, performed by a base station, comprising:
determining that a first-type user equipment (UE) operates in a first operating mode, wherein a maximum bandwidth supported by the first operating mode is less than or equal to a maximum bandwidth supported by a second operating mode.

21. The method according to claim 20, wherein the first operating mode is an operating mode for a second-type UE.

22. The method according to claim 20, wherein the first-type UE comprises: a UE supporting one receiving antenna and/or a UE supporting two receiving antennas.

23. The method according to any one of claims 20 to 22, wherein determining that the first-type UE operates in the first operating mode comprises one of:
determining that the first-type UE operates in the first operating mode during camping, based on the base station supporting the first operating mode; or
determining that the first-type UE operates in the first operating mode during camping, based on the base station supporting the first operating mode but not supporting the second operating mode.

24. The method according to claim 23, further comprising:
determining that the first-type UE operates in the second operating mode during camping, based on the base station supporting the first operating mode and the second operating mode.

25. The method according to any one of claims 20 to 22, further comprising:
receiving report information, wherein the report information is used to indicate that the first-type UE requires to operate in the first operating mode and/or requires not to operate in the second operating mode;
wherein determining that the first-type UE operates in the first operating mode comprises:
determining that the first-type UE operates in the first operating mode based on the report information.

26. The method according to claim 25, further comprising:
sending indication information;
wherein the indication information is used to instruct the first-type UE to report the report information; or the indication information is used to indicate that the base station supports the first-type UE to operate in the first operating mode, and/or to indicate that the base station supports access of the second-type UE.

27. The method according to claim 25, wherein determining that the first-type UE operates in the first operating mode based on the report information comprises:
determining that the first-type UE operates in the first operating mode in response to coverage being limited, based on the report information.

28. The method according to claim 27, wherein the base station comprises a source base station; and
the methods further comprises:
receiving a handover request sent by the first-type UE, wherein the handover request carries the report information; and
sending the handover request to a target base station.

29. The method according to any one of claims 20 to 22, further comprising:
receiving state information of the first-type UE, wherein the state information is used to indicate that the first-type UE operates in the first operating mode or the second operating mode.

30. The method according to claim 29, wherein receiving the state information of the first-type UE comprises:
receiving a release message carrying the state information.

31. An information processing apparatus, comprising:
a first processing module, configured to determine that a first-type user equipment (UE) operates in a first operating mode, wherein a maximum bandwidth supported by the first operating mode is less than or equal to a maximum bandwidth supported by a second operating mode.

32. An information processing apparatus, comprising:
a second processing module, configured to determine that a first-type user equipment (UE) operates in a first operating mode, wherein a maximum bandwidth supported by the first operating mode is less than or equal to a maximum bandwidth supported by a second operating mode.

33. A communication device, comprising:
a processor; and
a memory for storing instructions executable by the processor;
wherein the processor is configured to, when running the executable instructions, perform the information processing method according to any one of claims 1 to 19 or according to any one of claims 20 to 30.

34. A computer storage medium storing a computer-executable program, wherein when the executable program is executed by a processor, the information method according to any one of claims 1 to 19 or according to any one of claims 20 to 30 is implemented.
